# EUROPEAN PATENT APPLICATION

(11) **EP 1 596 300 A1**
(43) Date of publication of application: **16.11.2005**
(21) Application number: 05251439.5
(22) Date of filing: 09.03.2005
(51) Int. Cl.: G06F 9/46, G06F 11/14, H04L 29/06

(54) **Distributed application using mobile agents**

(30) Priority: 10.05.2004 US 842113
(71) Applicant: Agilent Technologies, Inc., Palo Alto, CA 94306 (US)
(72) Inventor: Eidson, John C., Palo Alto, California 94303 (US)
(74) Representative: Exell, Jonathan Mark

(57) **Abstract**

Techniques for providing a distributed application with mechanisms that enable communication among remote nodes without a central server or direct communication links among the remote nodes. A distributed application according to the present techniques includes a set of remote nodes 20-24 that provide a collective store for a set of information pertaining to the distributed application and a set of mobile agents 10-12 that carry the information among the remote nodes 20-24. The data carrier functions provided by the mobile agents 10-12 help avoid the cost and expense associated with a communication infrastructure and a central server.

## Description

### BACKGROUND

A distributed application may include a set of remotely located nodes that are geographically dispersed according to the needs of the distribute application. Geographically dispersed nodes may be referred to as remote nodes. Examples of remote nodes include remote nodes that perform measurement functions, remote nodes that perform control functions, and remote nodes that perform computational functions.

A distributed application may include functions that involve collecting and processing information associated with multiple remote nodes. For example, a distributed application may include functions performing computations on measurements obtained by remote measurement nodes and then returning the results of the computations to the remote measurement nodes or applying results of the computations to other remote nodes, e.g. remote control nodes.

A distributed application may employ a communication infrastructure to support functions that involve collecting and processing information associated with multiple remote nodes. For example, a distributed application may include a central server and direct communication links between the central server and the remote nodes so that the central server obtains information from the remote nodes via the direct communication links, performs processing in response to the obtained information, and then transfers the results of the processing to the remote nodes via the direct communication links.

Unfortunately, a communication infrastructure with a central server and direct communication links among remote nodes may be impractical in some types of distributed applications. For example, a distributed application may employ remote nodes for which direct communication to a central server is impractical and/or expensive. In addition, the use of a central server to obtain and process information may increase the cost of a distributed application.

### SUMMARY OF THE INVENTION

According to an aspect of the present invention, there is provided a distributed application according to claim 1.

Techniques for providing a distributed application are disclosed with mechanisms that enable communication among remote nodes without a central server or direct communication links among the remote nodes. A distributed application according to the present techniques includes a set of remote nodes that provide a collective store for a set of information pertaining to the distributed application and a set of mobile agents that carry the information among the remote nodes. The data carrier functions provided by the mobile agents help avoid the cost and expense associated with a communication infrastructure and a central server.

Other features and advantages of the present invention will be apparent from the detailed description that follows.

### BRIEF DESCRIPTION OF THE DRAWINGS

The present invention is described with respect to particular exemplary embodiments thereof and reference is accordingly made to the drawings in which:
**Figure 1** shows a distributed application that includes a set of remote nodes and a set of mobile agents;
**Figure 2** shows an example embodiment of a remote node according to the present teachings;
**Figure 3** shows an example embodiment of a mobile agent according to the present teachings;
**Figure 4** shows a distributed application according to the present teachings implemented in a traffic system.

### DETAILED DESCRIPTION

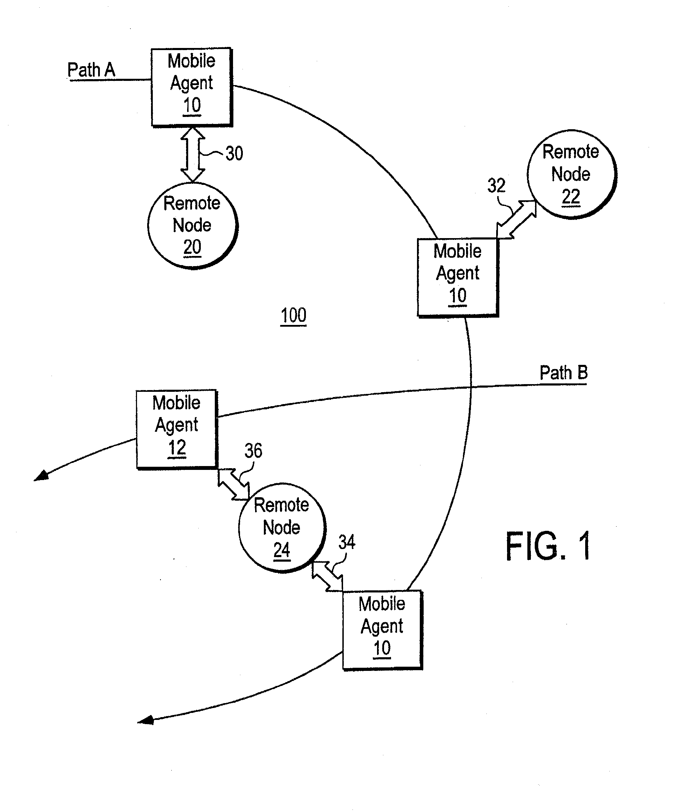

**Figure 1** shows a distributed application 100 that includes a set of remote nodes 20-24 and a set of mobile agents 10-12. The remote nodes 20-24 and the mobile agents 10-12 include mechanism for providing a collective data store for the distributed application 100 according to the present teachings. The remote nodes 20-24 each include an internal data store for holding data associated with the distributed application 100 and the mobile agents 10-12 act as data carriers for exchanging data among the remote nodes 20-24.

The distributed application 100 in the example shown includes three remote nodes and two mobile agents that carry information among the three remote data stores in the remote nodes for purposes of illustration. A distributed application according to the present teachings may include any number of remote nodes and any number of mobile agents.

Each mobile agent 10-12 moves through a geographic area encompassed by the distributed application 100 and establishes a communication channel with any of the remote nodes 20-24 that it encounters. For example, the mobile agent 10 moves along a path A and establishes a set of communication channels 30-34, respectively, with the remote nodes 20-24. The mobile agent 10 establishes the communication channel 30 to the remote node 20 when it is in relatively close proximity to the remote node 20 and establishes the communication channel 32 to the remote node 22 when it is in relatively close proximity to the remote node 22 and establishes the communication channel 34 to the remote node 24 when it is in relatively close proximity to the remote node 24. Similarly, the mobile agent 12 moves along a path B and establishes a communication channel 36 to the remote node 24 when it is in relatively close proximity.

Each mobile agent 10-12 may obtain data from or deposit data to any of the remote nodes 20-24 that it encounters. For example, the mobile agent 10 may obtain data from or deposit data to the remote node 20 via the communication channel 30 or may obtain data from or deposit data to the remote node 22 via the communication channel 32, etc. Similarly, the mobile agent 12 may obtain data from or deposit data to the remote node 24 via the communication channel 36.

Any one or more of the remote nodes 20-24 may perform computational processes on the data for the distributed application 100 including the data deposited by the mobile agents 10-12 and data transferred to the mobile agents 10-12. Similarly, any one or more of the mobile agents 10-12 may perform computational processes on the data for the distributed application 100 including the data provided to the remote nodes 20-24 and data obtained from the remote nodes 20-24.

The remote nodes 20-24 may include any combination of sensor nodes, actuator nodes, computational nodes, etc. according to the needs of the distributed application 100. Any one or more of the remote nodes 20-24 may be implemented as an ad hoc network of devices that employ relatively short range communication among the devices. An example of an ad hoc network of devices is a scatter net.

The mobile agents 10-12 may be embodied in devices that are held or worn by individuals, e.g. cell phones, PDAs, portable game or media devices, calculators, etc, or a vehicle mounted devices, e.g. a device in an automobile, aircraft, drone, a water buoy, etc.

Any one or more of the communication channels 30-36 may be embodied as a relatively short-range wireless communication link that is operative when a mobile agent and a remote node are in relatively close proximity, e.g. cellular, WiFi, Bluetooth, infrared, etc. Alternatively, any one or more of the communication channels 30-36 may be a wire link that involves a physical connection between a remote node and a mobile agent.

The mobile agents 10-12 may be viewed a leaving an information trail along the paths A and B. For example, the mobile agent 10 may deposit identity and/or path oriented records of visits to other remote nodes or locations at each remote node 20-24 visited. Similarly, the mobile agent 12 may deposit identity and/or path oriented records of visits to other remote nodes or locations at the remote node 24 when visited.

Any one or more of the mobile agents 10-12 may obtain measurements along its respective path A and B and deposit its obtained measurement to any of the remote nodes 20-24 that it encounters. For example, the mobile agent 10 may perform measurements along the path A and deposit its obtained measurements with the remote nodes 20-24 when encountered and the mobile_agent 12 may perform measurements along the path B and deposit its obtained measurements with the remote node 24 when encountered. The mobile agents 10-12 may then obtain each others measurements from the remote nodes 20-24 when encountered. The measurements of another mobile agent obtained from a remote node may be used to determine a path for a mobile agent. For example, the mobile agent 12 may obtain the measurements made by the mobile agent 10 from the remote node 24 and display the information to a user of the mobile agent 12 so that the user may determine a change in the path B after the encounter with the remote node 24.

The distributed application 100 may employ the remote nodes 20-24 to form a spatial view of an application variable. The mobile agents 10-12 provide a communication mechanism to convey the information pertaining to a variable among the remote nodes 20-24.

The distributed application 100 may employ the mobile agents 10-12 to interact with the remote node 20-24 in different ways depending on the number of prior visits or by prior visits of other similar mobile agents, or by the number of paths that traverse a remote node, or the direction of maximum/minimum path density traversing a remote node, etc. Similarly, the remote nodes 20-24 may interact differently with the mobile agents 10-12 based on these factors.

The distributed application 100 may perform a local, e.g. space/time sensitive, computation based on the path of the mobile agents 10-12 and/or value information deposited by the mobile agents 10-12. This computation may generate information for an external application, for example based on thresholds or other considerations, and the mobile agents 10-12 may be used to transport this information to an external server.

The mobile agents 10-12 may serve as communications and data collection agents on a path leading to a particular remote node. The mobile agents 10-12 may also perform part of computation for the distributed application 100, e.g. computing the average value of some variable as measured along their respective paths A and B to the remote nodes 20-24.

The distributed application 100 may disseminate information to the remote nodes 20-24 using the mobile agents 10-12 so that the transport of the information may be dependent on path density statistics of mobile agents. For example, additional mobile devices other than the mobile agents 10-12 may pick up this information and carry it to other remote nodes that have yet to obtain the information depending on the number of additional mobile devices and their paths.

Computation and storage for the distributed application 100 may be local to the remote nodes 20-24 until a significant set of information is computed that may be communicated to a server. This conserves server computation and storage resources as well as the cost of communicating raw data to a server.

The database functions implemented in the internal data stores of the remote nodes 20-24 may be such that the storage and computational schema reflect the spatial and temporal nature of the information carried by the mobile agents 10-12.

Any one or more of the remote nodes 20-24 may implement filters to determine what information to accept from and provide to the mobile agents 10-12. These filters may operate based on spatial, temporal, path, value/variable, or similar characteristics of data.

Any one or more of the remote nodes 20-24 may implement aging policies that determine how long information is maintained in an internal data store.

Any one or more of the remote nodes 20-24 may implement computations based on the contents of the database such as active triggers, accumulation of statistics, etc.

Any one or more of the mobile agents 10-12 may implement its storage and computational schema such that it reflects the spatial and temporal nature of the information delivered to the remote nodes 20-24.

Any one or more of the mobile agents 10-12 may implement filters to determine what information to accept from and provide to the remote nodes 20-24. These filters may operate based on spatial, temporal, path, value/variable, or similar characteristics of data.

Any one or more of the mobile agents 10-12 may implement aging policies that determine how long information is maintained. For example, all data may be left at each remote node encountered while only data measured during the next path segment may be retained, or data may be retained and deposited for certain time periods, or data may be retained and deposited for certain distances or based on the number of remote nodes traversed.

Any one or more of the mobile agents 10-12 may accumulate and perform computations on behalf of the remote nodes 20-24. For example, the mobile agents 10-12 may perform computations based on data currently being transported and or new data acquired by measurement or other means while traversing the paths A and B.

Any one or more of the remote nodes 20-24 may maintain a count of measurements obtained in a region of the distributed application 100 within a time window. These counts may be used to control the measurement sampling rates of the mobile agents 10-12 in view of the density of already gathered measurements. This may be used to determine the subsequent actions of the mobile,agents 10-12 based on a measurement history without resorting to central server applications. The mobile agents 10-12 may be programmed to increase/decrease their sampling rates depending on the direction of their respective paths A and B as well or in place of their current locations.

Any one or more of the remote node 20-24 may accumulate data from obtained measurements and either independently or in conjunction with its neighboring remote nodes perform running computations pertaining to one or more variables of the distributed application 100 and determine whether to communicate results to an external server. The data transfer to an external server may be performed by the mobile agents 10-12.

The distributed application 100 may be embodied in a highway system in which automobiles equipped with the appropriate communication and processor mechanisms play the role of the mobile agents 10-12 that move along paths defined by highways. The remote nodes 20-24 in such an embodiment may be RF signaling devices positioned at toll stations, intersections, etc.

The distributed application 100 may be embodied in a wildlife management system in which collar mounted devices provide the mobile agents 10-12 that move along paths defined by the paths of the collared animals. The remote nodes 20-24 in such an embodiment may be scatter nets or individual remote nodes.

The distributed application 100 may be an application for gathering critical information along the paths A and B of the mobile agents 10-12. Examples of such applications include emergency response and battlefield management. An emergency response application or a battlefield management application may be characterized as a 'what is at the end of the path' problem. In the case of the battlefield management, it would be desirable to obtain a time stamped profile of things encountered along certain paths by others. In the case of emergency management and battlefield management applications, such information may be employed to manage triage and safe path decisions. Personnel may carry a mobile agent that senses data or enables data entry of relevant information. This information may be deposited by the mobile agents at remote nodes scattered in the relevant area for processing and use by others.

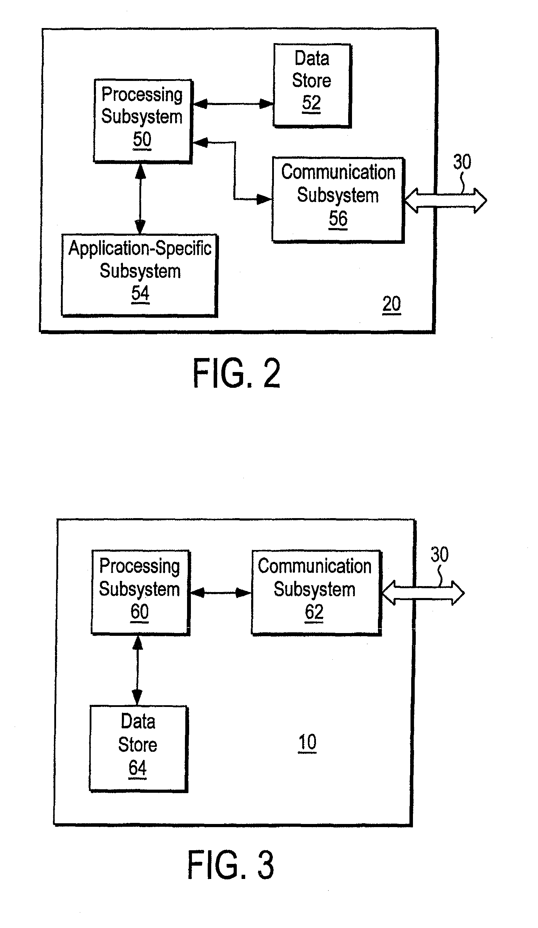

**Figure 2** shows an example embodiment of the remote node 20 according to the present teachings. The remote node 20 in the example embodiment includes a processing subsystem 50, a data store 52, an application-specific subsystem 54, and a communication subsystem 56.

The communication subsystem 56 enables the formation of communication channels, e.g. the communication channel 30, with the mobile agents 10-12. The communication subsystem 56 may provide wireless communication, e.g. cellular, WiFi, Bluetooth, infrared, etc, or wire-based communication depending on a particular embodiment of the distributed application 100.

The processing subsystem 50 implements code for obtaining information from the mobile agents 10-12 and for transferring information to the mobile agents 10-12 via the communication subsystem 56. The processing subsystem 50 maintains information pertaining to the distributed application 100 in the data store 52. The processing subsystem 50 may also implement code for performing computation on the information in the data store 52.

The processing subsystem 50 may also implement code for the application-specific subsystem 54. For example, the specific subsystem 54 may be a sensor device, an actuator device, a computational device, etc., that performs a desired function in the distributed application 100. For example, an application-specific subsystem in a remote node for a traffic system disclosed below may enable the measurement of traffic flow.

**Figure 3** shows an example embodiment of the mobile agent 10 according to the present teachings. The mobile agent 10 in the example embodiment includes a processing subsystem 60, a data store 64, and a communication subsystem 62.

The communication subsystem 62 enables the formation of communication channels, e.g. the communication channel 30, with the remote nodes 20-24. The communication subsystem 62 may provide wireless communication, e.g. cellular, WiFi, Bluetooth, infrared, etc, or wire-based communication depending on a particular embodiment of the distributed application 100.

The processing subsystem 60 implements code for obtaining information from the remote nodes 20-24 and for depositing information with the remote nodes 20-24 via the communication subsystem 62. The processing subsystem 60 stores information pertaining to the distributed application 100 in the data store 64. The processing subsystem 60 may also implement code for performing computation on the information in the data store 64.

The processing subsystem 60 may also implement code for performing measurement functions depending on the application. The mobile agent 10 may include an internal or externally connected application-specific subsystem for performing application-specific functions. For example, an application-specific subsystem in a mobile agent for a traffic system disclosed below may enable communication and interaction with encountered traffic nodes. In a battlefield system, an application-specific subsystem in a mobile agent may sense relevant objects and/or conditions.

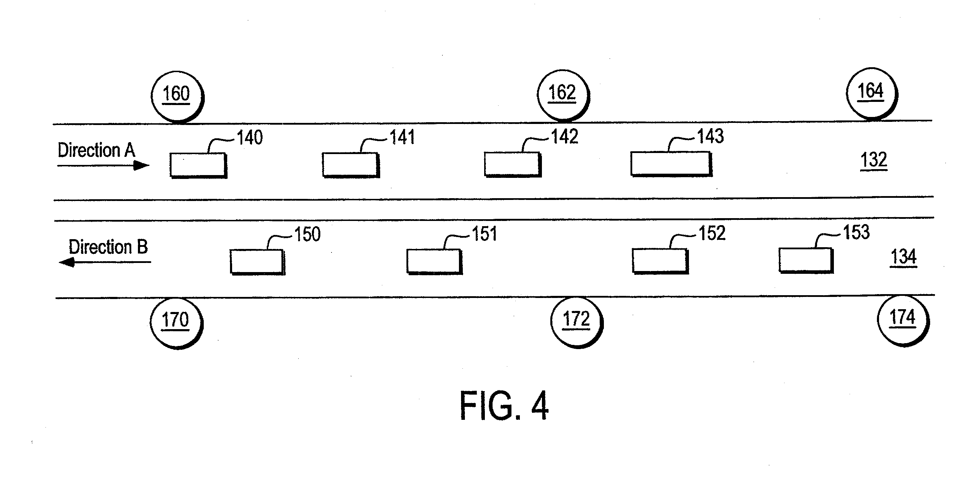

**Figure 4** shows a distributed application according to the present teachings implemented in a traffic system 130. The traffic system 130 measures traffic flow in a traffic lane 132 and a traffic lane 134. A set of automobiles 140-143 move in a direction A in the traffic lane 132 and a set of automobiles 150-153 move in a direction B in the traffic lane 134.

The traffic lane 132 includes a set of remote nodes 160-164 that measure traffic flow in the direction A and the traffic lane 134 includes a set of remote nodes 170-174 that measure traffic flow in the direction B. The remote nodes 160-164 are grouped pair-wise with the remote nodes 170-174 so that the remote nodes 160 and 170 communicate with one another and the remote nodes 162 and 172 communicate with one another and the remote nodes 164 and 174 communicate with one another. For example, pairs of remote nodes may be connected via underground cable or short range wireless link. Each remote node 160-164, 170-174 communicates its traffic flow measurements to the other remote node in its pair. For example, the remote node 160 communicates its traffic flow measurements to the remote node 170 and the remote node 170 communicates its traffic flow measurements to the remote node 160.

The automobiles 140-143 and 150-153 include on-board mobile agents that are capable of obtaining traffic flow measurements from the remote nodes 160-164, 170-174 and depositing traffic flow measurements with the remote nodes 160-164, 170-174. For example, the automobiles 140-143 and 150-153 may include on-board devices that communicate with the remote nodes 160-164, 170-174 in order to provide traffic flow information to the drivers of the automobiles 140-143 and 150-153.

The automobiles 140-143 act as mobile agents that carry traffic flow information for the traffic lane 134 upstream of the direction B. For example, the automobile 140 obtains traffic flow information for the traffic lane 134 from the remote node 160, which obtained it from the remote node 170, and carries it to and deposits it with the remote node 162, and then obtains traffic flow information for the traffic lane 134 from the remote node 162, which obtained it from the remote node 172, and then carries it to and deposits it with the remote node 164. The remote nodes 162 and 164 communicate the deposited traffic flow information to the remote nodes 172 and 174, respectively, and the remote nodes 172 and 174 may provide the upstream traffic flow information to the automobiles that are upstream in the traffic lane 134 as they pass the remote nodes 172 and 174. Similarly, the automobiles 150-153 act as mobile agents that carry traffic flow information for the traffic lane 132 upstream of the direction A.

The traffic system 130 does not require any non-local communication infrastructure, access to servers, etc. Each pair of remote nodes stands by itself and only requires a source of power, which is much less expensive to provide than normal wire-line or wireless communication to other pairs of remote nodes.

The distributed application 100 may alternatively be embodied as a network of computers or similar devices. In such an embodiment, the computers play the role of the remote nodes 20-24 while the network paths taken by the messages and the messages traversing the network play the role of the mobile agents 10-12.

The distributed application 100 may be implemented in a WiFi system in which WiFi devices act as remote nodes and the mobile agents carry information that reflects the availability of bandwidth and paths to areas of better access.

The foregoing detailed description of the present invention is provided for the purposes of illustration and is not intended to be exhaustive or to limit the invention to the precise embodiment disclosed. Accordingly, the scope of the present invention is defined by the appended claims.

## Claims

1. A distributed application, comprising:
a set of remote nodes (20-24) arranged to provide a collective store for a set of information pertaining to the distributed application;
a set of mobile agents (10-12) arranged to carry the information among the remote nodes (20-24).

2. The distributed application of claim 1, wherein the information includes data pertaining to a set of paths traversed by the mobile agents (10-12).

3. The distributed application of claim 1 or 2, wherein the information includes a set of data gathered by the mobile agents (10-12).

4. The distributed application of claim 1, 2 or 3, wherein the information includes a set of data gathered by the remote nodes (20-24).

5. The distributed application of any preceding claim, wherein the information includes a set of computational data generated by the mobile agents (10-12).

6. The distributed application of any preceding claim, wherein the information includes a set of computational data generated by the remote nodes (20-24).

7. The distributed application of any preceding claim, wherein one or more of the remote nodes (20-24) includes a communication subsystem for communication with the mobile agents (10-12) when the mobile agents (10-12) are within a predetermined proximity.

8. The distributed application of any preceding claim, wherein each mobile agent includes a communication subsystem that enables communication with one or more of the remote nodes (20-24) when within a predetermined proximity.

9. The distributed application of any preceding claim, wherein one or more of the remote nodes (20-24) includes an application-specified subsystem for performing a function associated with the distributed application.

10. The distributed application of any preceding claim, wherein one or more of the mobile agents (10-12) includes an application-specific subsystem for performing a function associated with the distributed application.
